# EUROPEAN PATENT APPLICATION

(11) **EP 4 404 405 A1**
(43) Date of publication of application: **24.07.2024**
(21) Application number: 21950373.7
(22) Date of filing: 09.12.2021
(51) Int. Cl.: H02G 9/06, H02G 9/10, F16L 5/02, H01B 7/36

(54) **CABLE PATHWAY SEALING SYSTEM AND INSTALLATION METHOD THEREFOR**

(30) Priority: 17.09.2021 KR 20210124856
(71) Applicant: Ildeung International, Nam-gu, Ulsan 44775 (KR)
(72) Inventor: KIM, Yeonjin, Ulsan 44740 (KR)
(74) Representative: Beck & Rössig European Patent Attorneys
(86) International application number: PCT/KR2021/018609
(87) International publication number: WO 2023/042967

(57) **Abstract**

An embodiment of the present invention provides a cable pathway sealing system for sealing a cable pathway having a through-hole through which an underground cable is inserted, and an installation method therefor, the cable pathway sealing system comprising: a body formed of an elastic material inserted in the through-hole; an adaptor including an elastic material, wherein the outer surface of the adaptor is in close contact with the inner surface of the body and the inner surface of the adaptor surrounds the underground cable; a front pressure plate provided on one end portion of the body; a rear pressure plate provided on the other end portion of the body; a fastening portion which is inserted through the body, the front pressure plate, and the rear pressure plate, and presses the body and the adaptor through the pressing of the front pressure plate and the rear pressure plate; and an adaptor selector which measures the outer diameter of the underground cable inserted in the through-hole and guides the adaptor that is suitable for the measured outer diameter of the underground cable.

## Description

### BACKGROUND

### 1. Field of the Invention

The present invention relates to a conduit sealing system and a method of installing the same, and more particularly, to a conduit sealing system equipped with an adaptor selector for providing an adaptor customized according to an outer diameter size of an underground cable, and a method of installing the same.

### 2. Discussion of Related Art

A conduit is a component that connects the inside and outside of an underground structure when an underground cable is buried in the underground structure such as a manhole, a handhole, or a power cable tunnel. A plurality of underground cables may be buried inside an underground structure through such a conduit.

Conventionally, since separate conduit waterproof equipment has not been provided in conduits, there has been a problem that rainwater and sewage flow into an underground structure through the conduit. Accordingly, various types of conduit waterproof equipment are being developed to block rainwater and sewage from flowing into an underground structure.

In general, an insertion hole corresponding to an underground cable to be buried is formed in conduit waterproof equipment installed in a conduit in advance so that an operator can bury the underground cable through the corresponding insertion hole.

However, in such conventional conduit waterproof equipment, when an outer diameter of an underground cable is greater than an insertion hole formed in the conduit waterproof equipment due to manufacturing errors of the underground cable, there is a problem that the underground cable cannot be inserted into the insertion hole. On the other hand, when the outer diameter of the underground cable is less than the insertion hole formed in the conduit waterproof equipment, there is a problem that a gap is generated between the underground cable and the insertion hole so that waterproof cannot be functioned properly.

In a conduit waterproof device that is not properly waterproofed, in the event of a fire in an underground cable, there may also be a problem that the fire of the underground cable cannot be effectively blocked in a conduit.

Therefore, in order to prevent water leak and fire spread in a conduit, various types of research have been conducted on conduit waterproof equipment provided to be in close contact with an underground cable and a conduit.

### SUMMARY OF THE INVENTION

The present invention is directed to providing a conduit sealing system equipped with an adaptor selector for providing an adaptor customized according to an outer diameter size of an underground cable, and a method of installing the same.

According to an aspect of the present invention, there is provided a conduit sealing system for sealing a conduit having a through-hole, through which an underground cable is inserted, formed therein, the conduit sealing system including a body made of an elastic material and inserted into the through-hole, an adaptor which is made of an elastic material and has an outer surface in close contact with an inner surface of the body and an inner surface surrounding the underground cable, a front press plate provided at one end portion of the body, a rear press plate provided at the other end portion of the body, a fastener which is inserted to pass through the body, the front press plate, and the rear press plate and presses the front press plate and the rear press plate to press the body and the adaptor, and an adaptor selector which measures an outer diameter size of the underground cable inserted into the through-hole and selects the adaptor suitable for the measured outer diameter size of the underground cable.

The adaptor selector may include a selector body forming an exterior and having a check mark hole formed at one end portion thereof, wherein the other end portion thereof wound around the underground cable is inserted into the check mark hole to measure the outer diameter size of the underground cable, a plurality of adaptor information displays which are displayed on one surface of the selector body and provide information about the adaptor usable according to the measured outer diameter size of the underground cable, and a plurality of cable information displays which are displayed on the one surface of the selector body and display information about the underground cable.

The selector body may have a trapezoidal shape in which a width of the other end portion is less than a width of the one end portion, and after the adaptor selector is wound around the underground cable, the adaptor selector may be configured to select the usable adaptor through the adaptor information display positioned in the check mark hole.

The adaptor information displays, which are indicated by the same cable information display and have different inner diameters, may be distinguished by different colors, model information, that is the same as a model information displayed on the adaptor information display, may be displayed on the corresponding adaptor, and a color displayed on the adaptor information display may be the same as a color of the corresponding adaptor.

A press check hole may be formed in the front press plate to check a pressed state of the body and the adaptor pressed with a pressure in a preset pressure range, and in a process of pressing the front press plate and the rear press plate through the fastener, when the body made of the elastic material protrudes outward from the press check hole, the body and adaptor may be pressed with a pressure in the preset pressure range.

According to another aspect of the present invention, there is provided a method of installing a conduit sealing system, the method including operation A of removing foreign materials on an outer surface of an underground cable disposed in an entrance of a conduit and foreign materials inside the conduit, operation B of measuring an outer diameter size of the underground cable disposed in the entrance of the conduit using an adaptor selector and selecting an adaptor suitable for the underground cable, operation C of applying a lubricant on an outer surface of the adaptor, an inner surface of a body in contact with the outer surface of the adaptor, and an inner surface of the adaptor in contact with an outer surface of the underground cable, operation D of mounting the adaptor on the body, operation E of temporarily assembling the body on which the adaptor is mounted and a front press plate and a rear press plate provided on a front surface and a rear surface of the body into a conduit sealing assembly using a fastener, operation F of inserting the temporarily assembled conduit sealing assembly into the conduit, and operation G of tightening the fastener provided in the conduit sealing assembly inserted into the conduit with a pressure in a preset pressure range.

When the body made of an elastic material protrudes further than the front press plate through a press check hole formed in the front press plate, it may be identified that the body and the adaptor are pressed with the pressure in the preset pressure range.

### BRIEF DESCRIPTION OF THE DRAWINGS

FIG. 1 is a block diagram of a conduit sealing system according to one embodiment of the present invention.
FIG. 2 is a perspective view of a conduit sealing assembly according to one embodiment of the present invention.
FIG. 3 is an exploded perspective view of the conduit sealing assembly according to one embodiment of the present invention.
FIG. 4 is an exemplary view of an adaptor selector according to one embodiment of the present invention.
FIG. 5 is a use state view of the adaptor selector according to one embodiment of the present invention.
FIG. 6 is an exemplary view illustrating a portion of the adaptor selector according to one embodiment of the present invention.
FIG. 7 is an exemplary diagram illustrating sizes of a standard outer diameter and a maximum outer diameter for each type of standardized underground cables according to one embodiment of the present invention.
FIG. 8 is an exemplary view illustrating of a flange size and a conduit size of a standardized conduit according to one embodiment of the present invention.
FIG. 9 is an exemplary diagram illustrating an installation standard table of the conduit sealing assembly according to one embodiment of the present invention.
FIG. 10 is a flowchart illustrating a method of installing a conduit sealing system according to one embodiment of the present invention.

### DETAILED DESCRIPTION OF EXEMPLARY EMBODIMENTS

Hereinafter, the present invention will be described with reference to the accompanying drawings. However, the present invention may be embodied in various different forms and thus is not limited to the embodiments to be described hereafter. In drawings, parts irrelevant to the description are omitted to clearly describe the present invention, and like reference numerals denote like parts through the specification.

Throughout the present specification, the term "connected to" or "coupled to" that is used to designate a connection or coupling of one element to another element includes both a case that an element is "directly connected or coupled to" another element and a case that an element is "indirectly connected or coupled to" another element via still another element. When a part "includes" or "comprises" an element, unless there is a particular description contrary thereto, the part may further include other elements, not excluding the other elements.

In the present invention, the terms "on" or "below" means that a member is positioned on or below a target member and does not mean that the member is necessarily positioned on or below the target member in the direction of gravity.

Hereinafter, embodiments of the present invention will be described in detail with reference to the accompanying drawings.

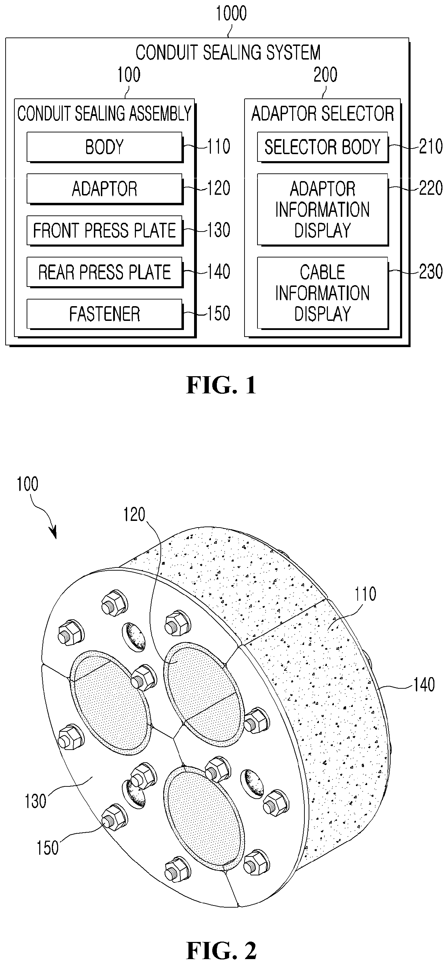

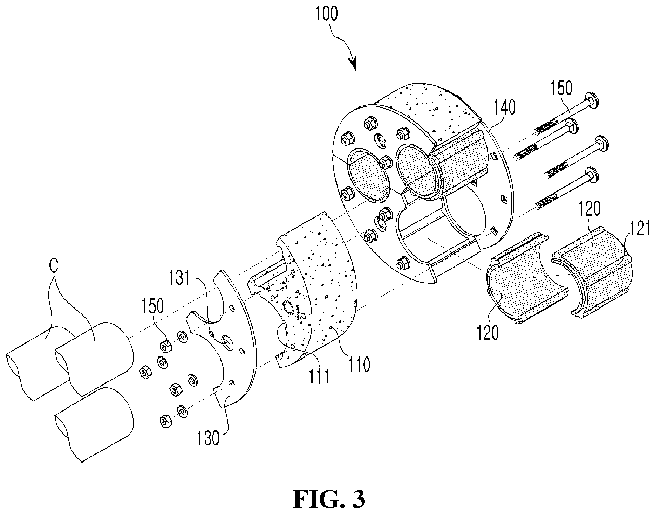

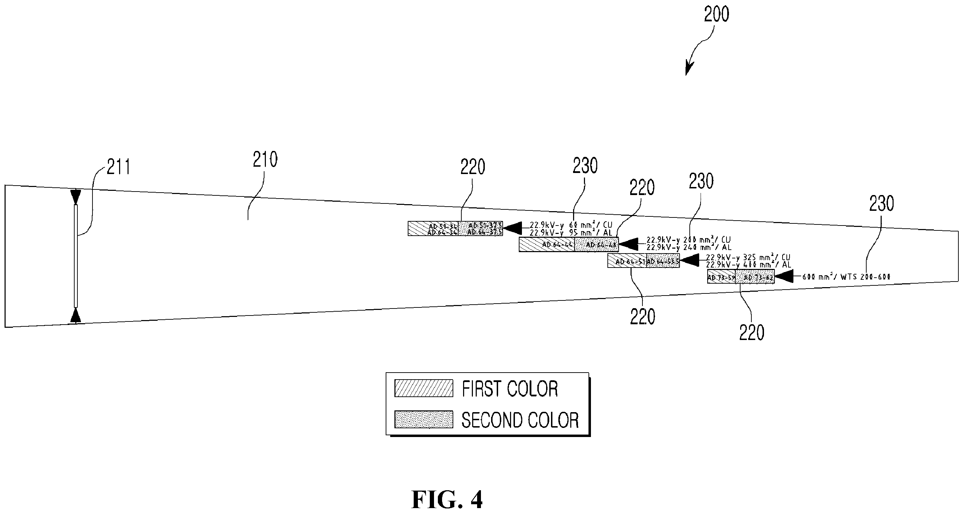

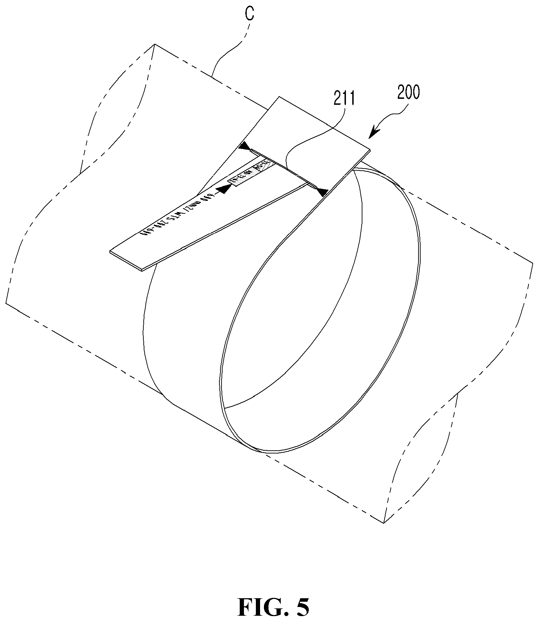

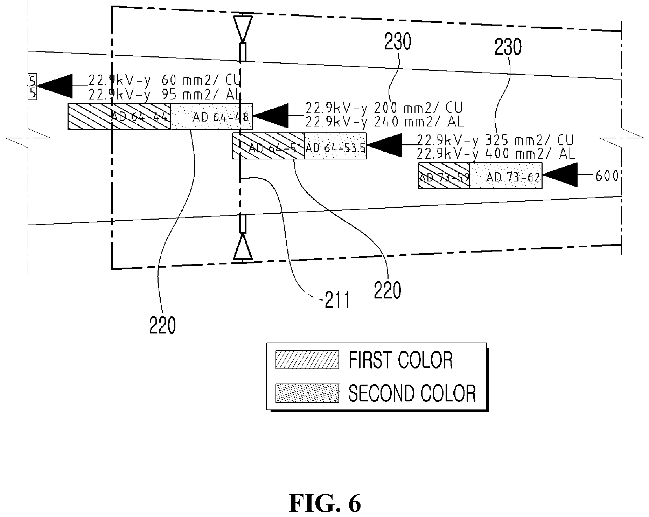

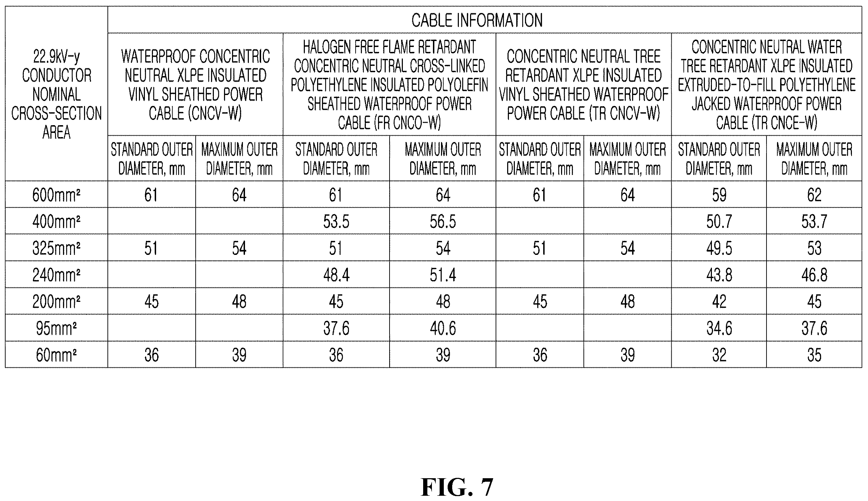

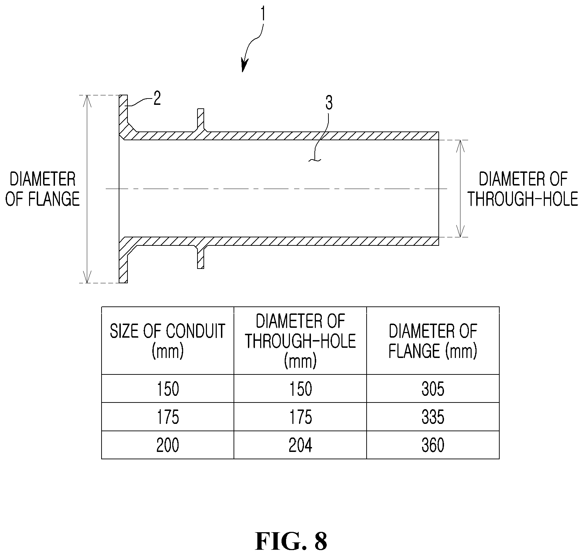

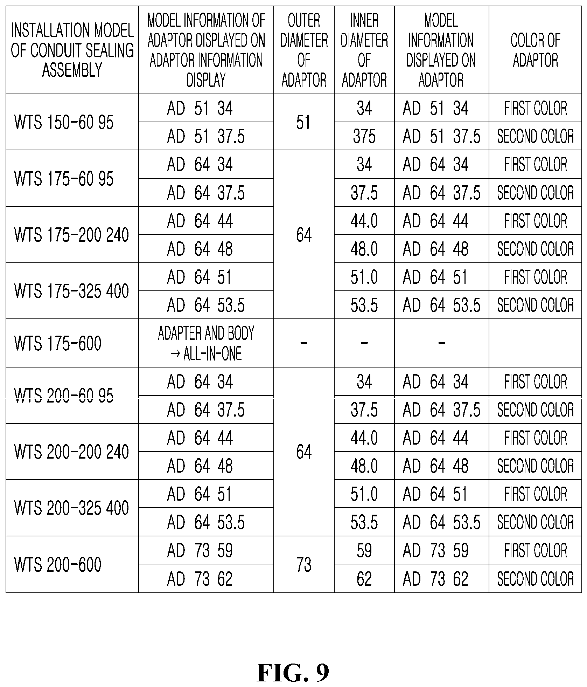

FIG. 1 is a block diagram of a conduit sealing system according to one embodiment of the present invention. FIG. 2 is a perspective view of a conduit sealing assembly according to one embodiment of the present invention. FIG. 3 is an exploded perspective view of the conduit sealing assembly according to one embodiment of the present invention. FIG. 4 is an exemplary view of an adaptor selector according to one embodiment of the present invention. FIG. 5 is a use state view of the adaptor selector according to one embodiment of the present invention. FIG. 6 is an exemplary view illustrating a portion of the adaptor selector according to one embodiment of the present invention. FIG. 7 is an exemplary diagram illustrating sizes of a standard outer diameter and a maximum outer diameter for each type of standardized underground cables according to one embodiment of the present invention. FIG. 8 is an exemplary view illustrating of a flange size and a conduit size of a standardized conduit according to one embodiment of the present invention. FIG. 9 is an exemplary diagram illustrating an installation standard table of the conduit sealing assembly according to one embodiment of the present invention.

As shown in FIGS. 1 to 9, a conduit sealing system 1000 may include a conduit sealing assembly 100 and an adaptor selector 200. Here, the conduit sealing assembly 100 is a component that substantially seals a conduit 1. The conduit sealing assembly 100 may include a body 110, an adaptor 120, a front press plate 130, a rear press plate 140, and a fastener 150.

The conduit sealing system 1000 is configured to seal the conduit 1 through which an underground cable C passes. Thus, rainwater and sewage can be blocked from flowing into an underground structure through the conduit 1.

Here, the underground structure may be a manhole, a handhole, or a power cable tunnel. The underground cable C may be a power cable. The conduit sealing system 1000 is not necessarily applied only to the underground cable C and may be equally applied to pipes or ducts.

The conduit sealing assembly 100 will be described through an example in which three bodies 110 having the same structure are coupled to each other. The number of bodies 110 is not necessarily limited to only three. Of course, the number of bodies 110 may be optionally adjusted according to the number of underground cables C provided in the conduit 1.

An exterior of a body assembly in which the divided bodies 110 are assembled is formed to correspond to a through-hole 3 formed in the conduit 1.

An inner surface of the body 110 is formed to correspond to an outer surface of the adaptor 120 such that the adaptor 120 is mounted thereon. A locking groove 111 may be further formed in the inner surface of the body 110, and a locking protrusion 121 corresponding to the locking groove 111 may be further formed on the outer surface of the adaptor 120. When the locking groove 111 and the locking protrusion 121 are coupled, the adaptor 120 mounted inside the body 110 may be prevented from spinning in the body 110, or a slit may be prevented from being generated. A coupling structure between the body 110 and the adaptor 120 is not limited to a specific coupling structure. Of course, the coupling structure may be formed in various coupling structures.

Meanwhile, the adaptor 120 is configured to support the underground cable C. The outer surface of the adaptor 120 is in close contact with the inner surface of the body 110, and an inner surface of the adaptor 120 surrounds an outer surface of the underground cable C passing through the conduit 1. The adaptor 120 also forms a divided form and is configured to surround an entire circumference of the underground cable C. Here, two adaptors 120 may be formed as a pair of adaptors.

The body 110 and the adaptor 120 may be made of an elastic material such as rubber. Thus, in a state in which the conduit sealing assembly 100 is inserted into the conduit 1, in a process in which the front press plate 130 and the rear press plate 140 press the body 110 by the fastener 150, an outer surface of the body 110 elastically presses an inner surface of the conduit 1. That is, the outer surface of the body 110 is pressed against the inner surface of the conduit 1.

The body 110 is elastically pressed not only to the outside of the body 110 but also to the inside thereof to press the adaptor 120. In this case, the adaptor 120 is elastically pressed by a force transmitted from the body 110 and is pressed against the outer surface of the underground cable C and the inner surface of the body 110. That is, the adaptor 120 is tightly fixed to the outer surface of the underground cable C and the inner surface of the body 110.

As described above, the body 110 and the adaptor 120 are pressed by the front press plate 130 provided at one end portion of the body 110 and the rear press plate 140 provided at the other end portion of the body 110, and high airtightness, waterproof, and fire prevention performance in the conduit 1 are implemented.

Here, an outer diameter of the front press plate 130 is greater than that of the rear press plate 140. When the conduit sealing assembly 100 is inserted into the conduit 1, the front press plate 130 is provided to be supported on a flange 2 formed in the conduit 1. The fasteners 150 are provided as types of a bolt and a nut and are inserted to pass through and couple the front press plate 130, the body 110, and the rear press plate 140.

As described above, in a state in which the front press plate 130 is supported on the flange 2, when the fastener 150 provided as a type of a nut that presses the front press plate 130 and the rear press plate 140 is tightened, the rear press plate 140 may be moved toward the front press plate 130, and thus the body 110 and the adaptor 120 may be tightly pressed.

Here, a press check hole 131 is formed in the front press plate 130. Through the press check hole 131, an operator can check whether the body 110 and the adaptor 120 are elastically pressed with a pressure in a preset pressure range. That is, when the body 110 is elastically pressed with a pressure in the preset pressure range by the front press plate 130 and the rear press plate 140, the body 110 made of an elastic material protrudes outward from the press check hole 131. In this case, when the body 110 protruding through the press check hole 131 protrudes further than the front press plate 130, an operator can check that the body 110 and the adaptor 120 are pressed with the pressure in the preset pressure range.

For example, the date of manufacture may be displayed on a portion of the body 110 exposed to the outside through the press check hole 131. Therefore, an operator can easily check an installation time of the corresponding conduit sealing assembly 100 through the date of manufacture displayed on the body 110 exposed to the outside. When a replacement operation is performed on the conduit sealing assembly 100 used for a certain period of time, an operator can check the date of manufacture to easily identify the conduit sealing assembly 100 that needs to be replaced.

Meanwhile, the adaptor selector 200 is configured to measure an outer diameter size of the underground cable C installed to pass through the conduit 1 and provide adaptor information suitable for the measured outer diameter size.

Here, an outer diameter size of the underground cable C may deviate from a standard range during a manufacturing process or use process of the underground cable C. For example, when the underground cable C of which an outer diameter size deviates from the standard range is installed in the conduit 1, an operator checks only a type of the corresponding underground cable C and uses the adaptor 120 suitable for the checked type to perform an operation of sealing the conduit 1. However, in this case, the operation of sealing the conduit 1 cannot be performed properly. In addition, even when an operator measures an outer diameter size of the underground cable C installed in the conduit 1 by himself/herself, the operator does not know which adaptor 120 should be used according to the outer diameter size of the underground cable C.

Therefore, in the present invention, before the conduit sealing assembly 100 is installed, an operator measures an outer diameter size of each underground cable C disposed in the conduit 1 using the adaptor selector 200 by himself/herself and selects and uses an adaptor suitable for the measured underground cable C, thereby perfectly performing the sealing of the conduit 1.

The adaptor selector 200 may include a selector body 210, an adaptor information display 220, and a cable information display 230.

The selector body 210 forms an exterior of the adaptor selector 200 and is configured to measure an outer diameter size of the underground cable C.

The selector body 210 may be formed in a trapezoidal shape in which a width of one end portion is greater than a width of the other end portion.

A check mark hole 211 is formed in one end portion of the selector body 210. A length of the check mark hole 211 is greater than the width of the other end portion of the selector body 210.

Accordingly, in a process in which an operator measures an outer diameter size of the underground cable C, the other end portion of the selector body 210 may be easily inserted into the check mark hole 211.

Here, after the other end portion of the selector body 210 wound around the underground cable C is inserted into the check mark hole 211, the other surface of the selector body 210 may be pulled to come into close contact with the entire circumference of the underground cable C, and thus the adaptor selector 200 may measure an outer diameter size of the underground cable C.

The adaptor information display 220 is displayed on one surface of the selector body 210.

The adaptor information display 220 is configured to provide information about the adaptor 120 used according to an outer diameter size of the underground cable C. Since the adaptor information display 220 needs to provide various types of information about the adaptor 120 suitable for the outer diameter size of the underground cable C, a plurality of adaptor information displays 220 displayed on the selector body 210 may be formed.

The adaptor selector 200 is not for numerically checking an actual outer diameter size of the underground cable C and is configured to provide information about the corresponding adaptor 120 for selecting the adaptor 120 suitable for an outer diameter size of the underground cable C.

In this case, a portion of the underground cable C of which an outer diameter size is measured is a portion of the underground cable C, of which an outer diameter size is measured, disposed in the conduit 1. This is because the portion of the underground cable C disposed in the conduit 1 is a portion that is substantially sealed with the conduit sealing assembly 100.

Here, for example, even when the underground cable C is manufactured in any one type, it is difficult to manufacture an entire length of the underground cable C to have the same diameter. Therefore, the outer diameter size of the underground cable C disposed in the conduit 1 may satisfy a standard range of the underground cable C or may deviate from the standard range of the underground cable C.

For example, referring to FIG. 7, as the underground cable C, various power cables such as a waterproof concentric neutral cross-linked polyethylene (XLPE) insulated vinyl sheathed power cable, a halogen free flame retardant concentric neutral cross-linked polyethylene insulated polyolefin sheathed waterproof power cable, a concentric neutral tree retardant XLPE insulated vinyl sheathed waterproof power cable, and a concentric neutral water tree retardant XLPE insulated extruded-to-fill polyethylene jacked waterproof power cable may be used. Standard specifications (standard outer diameter and maximum outer diameter) of the underground cable C are determined according to a cable type, and the underground cable C is manufactured to satisfy the standard specifications. However, in an actual manufacturing process, there is a problem that an outer diameter size of the underground cable C cannot be manufactured to be constant in a certain error range. That is, in some cases, some portions of a total length of the underground cable C may deviate from a standard specification range of the underground cable C. An outer diameter size of the underground cable C may be changed due to tension or contraction of the underground cable C generated during processes of laying and using the underground cable C.

Thus, even when an outer diameter size of each type of the underground cable C disposed in the conduit 1 deviates from the standard specification range of the corresponding underground cable C, the conduit sealing system 1000 may provide the adaptor 120 suitable for an outer diameter size of the corresponding underground cable C through the adaptor selector 200, and thus the conduit 1 can be perfectly sealed.

Here, the adaptor information displays 220, which are indicated by the same cable information display 230 and have different inner diameters, may be distinguished by different colors. That is, the adaptor information displays 220 having different inner diameters may be distinguished by a first color and a second color. For example, the first color may be an orange color, and the second color may be a blue color.

Model information of the adaptor 120 may be displayed in the form of characters and numbers on the adaptor information display 220. For example, when the model information of the adaptor 120 is displayed as AD 64-51 on the adaptor information display 220, AD 64-51 indicates that an outer diameter of the corresponding adaptor 120 is 64 mm and an inner diameter thereof is 51 mm. The same model information is displayed on the adaptor 120 corresponding to the model information of the adaptor 120 displayed on the adaptor information display 220.

As described above, when the adaptor information display 220 selected from an outer diameter size of the underground cable C measured through the adaptor selector 200 displays AD 64-51, an operator only needs to install and use the adaptor 120, which has the first color and on which model information of AD 64-51 is displayed, on the underground cable C on which measurement is performed. Therefore, an operator can more conveniently distinguish the required adaptor 120 from the plurality of adaptors 120 through a color and model information.

Referring to FIG. 6, when an outer diameter size of the underground cable C measured through the adaptor selector 200 corresponds to AD 64-48 and AD 64-51 at the same time, the adaptor 120 to be used in the corresponding conduit 1 is determined according to a cable type of the underground cable C actually installed in the conduit 1. For example, in a state in which the outer diameter size of the underground cable C measured through the adaptor selector 200 corresponds to AD 64-48 and AD 64-51 at the same time, when a type of the underground cable C corresponds to 22.9 kV-y 325 mm²/CU or 22.9 kV-y 400 mm²/AL, an operator may use the adaptor 120 of AD 64-51. As described above, the adaptor selector 200 selects the adaptor 120 most suitable for the corresponding underground cable C in consideration of a cable type of the corresponding underground cable C as well as an outer diameter size of the underground cable C.

The cable information display 230 is displayed on one surface of the selector body 210.

The cable information display 230 is configured to display information about the underground cable C. Through the cable information display 230, an operator may also check cable information about the corresponding underground cable C in a process of measuring an outer diameter size of the underground cable C.

Meanwhile, referring to FIG. 8, the conduit 1 installed in an underground structure such as a manhole, a handhole, or a power cable tunnel is standardized in a preset type. The conduit 1 is standardized, for example, in a 150, 175, or 200 type according to a diameter of the through-hole 3, and the standardized conduit 1 is installed in the underground structure.

As described above, the conduit sealing assembly 100 to be installed in the conduit 1 is finally determined through information about the conduit 1 installed in the underground structure and measurement of an outer diameter size of the underground cable C buried through the conduit 1.

In an installation model of the conduit sealing assembly 100 shown in FIG. 9, except for the adaptor 120, the body 110 having a preset size for each installation model, the front press plate 130, the rear press plate 140, and the fastener 150 are provided as one set.

For example, when the adaptor 120 selected from the adaptor selector 200 is AD 64-51 and a diameter of the through-hole 3 installed in the corresponding conduit 1 is 175, an operator only needs to install an installation model of WTS 175-325 400 of the conduit sealing assembly 100 and AD 64-51 of the adaptor 120 in the corresponding underground cable C from the installation standard table of the conduit sealing assembly 100.

Therefore, even when an outer diameter size of the underground cable C and a size of the conduit 1 are varied, an operator can conveniently install the optimal conduit sealing assembly 100 suitable for an installation position.

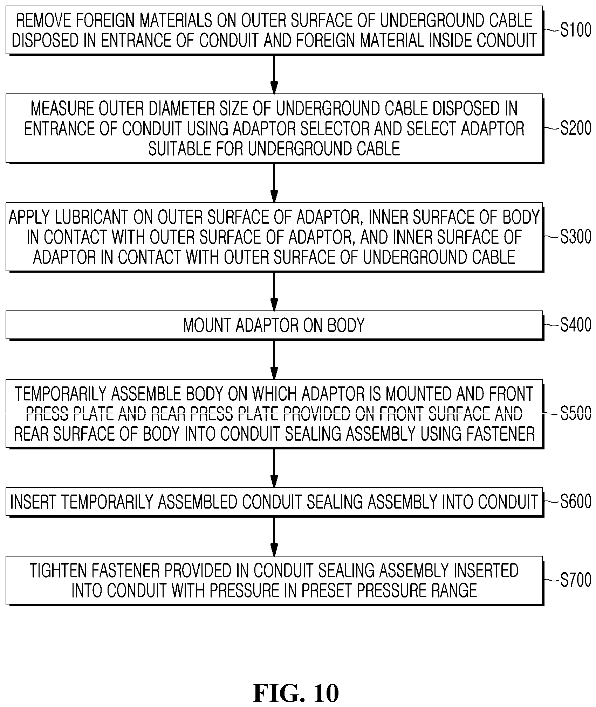

FIG. 10 is a flowchart illustrating a method of installing a conduit sealing system according to one embodiment of the present invention. The method of installing a conduit sealing system 1000 will be described with reference to FIG. 10.

First, foreign materials on an outer surface of an underground cable C disposed in an entrance of a conduit 1 and foreign materials inside the conduit 1 are removed (S100).

Next, an outer diameter size of the underground cable C disposed in the entrance of the conduit 1 is measured using an adaptor selector 200 to select an adaptor 120 suitable for the underground cable C (S200).

Thereafter, a lubricant is applied on an outer surface of the adaptor 120, an inner surface of a body 110 in contact with the outer surface of the adaptor, and an inner surface of the adaptor 120 in contact with an outer surface of the underground cable C (S300). This is to make a coupling between components more convenient.

Next, the adaptor 120 is mounted on the body 110 (400).

Then, the body 110 on which the adaptor 120 is mounted and a front press plate 130 and a rear press plate 140 provided on front and rear surfaces of the body 110 are temporarily assembled into a conduit sealing assembly 100 using a fastener 150 (S500).

Next, the temporarily assembled conduit sealing assembly 100 is inserted into the conduit 1 (600).

Finally, the fastener 150 provided in the conduit sealing assembly 100 inserted into the conduit 1 is tightened with a pressure in a preset pressure range to seal the conduit 1 (700).

Here, when the body 110 made of an elastic material protrudes further than the front press plate 130 through a press check hole 131 formed in the front press plate 130, an operator may identify that the body 110 and the adaptor 120 are pressed with the pressure in the preset pressure range.

The effects of a conduit sealing system and a method of installing the same according to the present invention described above will be described below.

According to the present invention, since an adaptor selector can provide an adaptor customized according to an outer diameter size of an underground cable installed in a conduit, a conduit can be effectively sealed.

The effects of the present invention are not limited to the above effect and should be understood to include all effects that can be deduced from the detailed description of the present invention or the configuration of the present invention described in the appended claims.

However, embodiments of the present invention are merely exemplary, and the scope of the present invention is not limited by the scope described in the embodiments.

The above description of the present invention is provided for the purpose of illustration, and it would be understood by those skilled in the art that various specific embodiments may be easily implemented without departing from the technical spirit or essential characteristics of the present invention. Therefore, it should be understood that the example embodiments described herein are illustrative and not restrictive in all aspects. For example, each component described as a singular form may be distributed and implemented, and components described as being distributed may also be implemented in a combined form.

Thus, the scope of the present invention is defined by the claims described below, and the present invention should be construed to cover all modifications or variations induced from the meaning and scope of the appended claims and their equivalents.

## Claims

1. A conduit sealing system for sealing a conduit having a through-hole, through which an underground cable is inserted, formed therein, the conduit sealing system comprising:
a body made of an elastic material and inserted into the through-hole;
an adaptor which is made of an elastic material and has an outer surface in close contact with an inner surface of the body and an inner surface surrounding the underground cable;
a front press plate provided at one end portion of the body;
a rear press plate provided at the other end portion of the body;
a fastener which is inserted to pass through the body, the front press plate, and the rear press plate and presses the front press plate and the rear press plate to press the body and the adaptor; and
an adaptor selector which measures an outer diameter size of the underground cable inserted into the through-hole and selects the adaptor suitable for the measured outer diameter size of the underground cable.

2. The conduit sealing system of claim 1, wherein the adaptor selector includes:
a selector body forming an exterior and having a check mark hole formed at one end portion thereof, wherein the other end portion thereof wound around the underground cable is inserted into the check mark hole to measure the outer diameter size of the underground cable;
a plurality of adaptor information displays which are displayed on one surface of the selector body and provide information about the adaptor usable according to the measured outer diameter size of the underground cable; and
a plurality of cable information displays which are displayed on the one surface of the selector body and display information about the underground cable.

3. The conduit sealing system of claim 2, wherein:
the selector body has a trapezoidal shape in which a width of the other end portion is less than a width of the one end portion; and
after the adaptor selector is wound around the underground cable, the adaptor selector is configured to select the usable adaptor through the adaptor information display positioned in the check mark hole.

4. The conduit sealing system of claim 2, wherein:
the adaptor information displays, which are indicated by the same cable information display and have different inner diameters, are distinguished by different colors;
model information, that is the same as a model information displayed on the adaptor information display, is displayed on a corresponding adaptor; and
a color displayed on the adaptor information display is the same as a color of the corresponding adaptor.

5. The conduit sealing system of claim 1, wherein:
a press check hole is formed in the front press plate to check a pressed state of the body and the adaptor pressed with a pressure in a preset pressure range; and
in a process of pressing the front press plate and the rear press plate through the fastener, when the body made of the elastic material protrudes outward from the press check hole, the body and adaptor are pressed with the pressure in the preset pressure range.

6. A method of installing a conduit sealing system, the method comprising:
operation A of removing foreign materials on an outer surface of an underground cable disposed in an entrance of a conduit and foreign materials inside the conduit;
operation B of measuring an outer diameter size of the underground cable disposed in the entrance of the conduit using an adaptor selector and selecting an adaptor suitable for the underground cable;
operation C of applying a lubricant on an outer surface of the adaptor, an inner surface of a body in contact with the outer surface of the adaptor, and an inner surface of the adaptor in contact with an outer surface of the underground cable;
operation D of mounting the adaptor on the body;
operation E of temporarily assembling the body on which the adaptor is mounted and a front press plate and a rear press plate provided on a front surface and a rear surface of the body into a conduit sealing assembly using a fastener;
operation F of inserting the temporarily assembled conduit sealing assembly into the conduit; and
operation G of tightening the fastener provided in the conduit sealing assembly inserted into the conduit with a pressure in a preset pressure range.

7. The method of claim 6, wherein, in operation G, when the body made of an elastic material protrudes further than the front press plate through a press check hole formed in the front press plate, it is identified that the body and the adaptor are pressed with the pressure in the preset pressure range.
